# EUROPEAN PATENT APPLICATION

(11) **EP 0 617 108 A1**
(43) Date of publication of application: **28.09.1994**
(21) Application number: 94420080.7
(22) Date of filing: 10.03.1994
(51) Int. Cl.: C09K 11/84, H04N 1/46, G03B 27/73, H04N 5/87

(54) **Improved CRT phosphor for the reproduction of color photographs**

(30) Priority: 26.03.1993 US 38727
(71) Applicant: EASTMAN KODAK COMPANY, Rochester, New York 14650-2201 (US)
(72) Inventor: Carson, John F., c/o Eastman Kodak Company, Rochester, New York 14650-2201 (US); Smith, Douglas H., c/o Eastman Kodak Company, Rochester, New York 14650-2201 (US); Yocom, Perry Neil, c/o Eastman Kodak Company, Rochester, New York 14650-2201 (US); Kane, James, c/o Eastman Kodak Company, Rochester, New York 14650-2201 (US)
(74) Representative: Buff, Michel

(57) **Abstract**

The present invention relates to an improved single component phosphor for use in cathode ray tubes (CRTs) which are employed in the recording of information, typically a tricolor-decomposed color photograph, onto photographic print material. Typically, a CRT is used as the source of optical radiation (light) employed to expose the image (record the information) onto the photographic print material. More particularly, the present invention is directed to the chemical composition of the phosphor deposited on the faceplate of the CRT and the relation of its optical properties to the characteristics of the photographic print material.

## Description

### BACKGROUND OF THE INVENTION

### Field of the Invention

The present invention relates to an improved single component phosphor for use in cathode ray tubes (CRTs) which are employed in the recording of information, typically a tricolor-decomposed color photograph, onto photographic print material. Typically, a CRT is used as the source of optical radiation (light) employed to expose the image (record the information) onto the photographic print material. More particularly, the present invention is directed to the chemical composition of the phosphor deposited on the faceplate of the CRT and the relation of its optical properties to the characteristics of the photographic print material.

### Description of the Prior Art

It is known to form a hardcopy image, which can take the form of a transparency or a reflection print, from a tricolor-decomposed digital representation of the original image which is then exposed onto a photographic media. A system for generating such images is shown in U.S. Patent No. 4,726,675 and generally comprises a monochromatic cathode ray tube (CRT). Each color component of the original image, for example, blue (B), green (G) and red (R), of the tricolor-decomposed digital representation of the original image, is sequentially converted to a pattern of light on the monochromatic CRT which is collected and focused onto a photosensitive medium, such as a photographic film or paper, by an optical system. A plurality of color filters which each transmit a selected color, for example, blue, green and red, are sequentially inserted into the light path so that light only of that color corresponding to the tricolor component of the image being displayed on the CRT is transmitted to the photosensitive medium. Following the exposure of the photographic medium to each of the light components, the photosensitive medium is processed to obtain a color transparency or a reflection print. The referenced patent teaches the use of a phosphor whose spectral output is matched to the photosensitive print medium, particularly to the use of a mixture of two fluorescent substances, the first composed of (Y.Gd)O₂S:Tb and the second selected from Y₂O₃:Eu or Y₂O₂S:Eu.

It has been found that the use of mixtures of phosphors has the disadvantage that the dispersibility of the different phosphors is poor and they tend to form aggregates upon the preparation of the fluorescent surface resulting in spatial nonuniform emission of light of each of the colors. Homogeneous mixtures of multi-component phosphors are both difficult to make and difficult to maintain during the CRT fabrication process. This is especially true if the component phosphors differ in their chemical composition or density. Differences in surface chemistry can cause one component to aggregate and thus introduce an unacceptable granularity into the phosphor screen. Differences in density can also cause segregation of the phosphor mixture which manifests itself as a screen defect. If a CRT is large enough, such non-uniformity might not be objectionable; however, since it is desirable to minimize the overall size of the printing system, small CRTs are preferred. Such small CRTs require the use of magnifying optics to produce an adequate size print, which magnification results in the phosphor nonuniformities becoming objectionably noticeable in the prints produced.

Published U.K. Patent Application No. 2,178,050 A, published on Feb. 4, 1987, discloses a single component fluorescent material, or phosphor, for use as a fluorescent surface in a CRT in a system for producing images on a color photographic film. The phosphor is Y₂O₂S activated with Tb and Eu, both having a concentration in the range of 0.05 to 0.3 atomic percent. The phosphor disclosed by this publication is taught to produce red, green and blue light emissions at relatively high levels to essentially match the respective sensitivities of the different color emulsions of color photographic film.

It is known to minimize the number of field scans of a CRT necessary to generate the colors for a particular image to maximize the productivity of a color photographic reproduction system. Moreover, it has been found that the operation and control of the system is simplified and thus made more economical if the number of field scans required to produce an image is approximately the same for each color, particularly that the number of field scans to form an image of any one color not greatly exceed that necessary to form the image of any of the other colors. This requires that the effective blue, green and red light output of the CRT bear an inverse relation to the photosensitivity of the photosensitive medium to the respective colors, and is known in the art as balancing or matching the light source to the photosensitive medium. While the phosphor disclosed in the above-referenced U.K. published Patent Application solves the problem of uneven light emissions resulting from a mixture of phosphors, it does not provide a satisfactory solution to the problem of generating photographic prints on color photographic print material.

This results from the fact that conventional photographic print materials (both for the production of reflection prints as well as for transparent prints) are ordinarily exposed in optical printers with a tungsten light source, which has high emission in the red region. Accordingly, the sensitivity of print materials to respective color exposures is typically quite different from the sensitivity of photographic film to the same color exposures, i. e. the print material has a relatively low sensitivity to light in the red region compared to the red sensitivity of film. Moreover, conventional print materials are usually exposed through color negative film which typically include an orange masking dye in addition to the imaging dyes. The orange masking dye also causes the exposure light to have a large component in the red region. Thus, conventional color print materials are sensitized so that the sensitivity to the blue and green light exposures is much higher than the sensitivity to the red light exposure to compensate for the above factors. Since it is desired that the photofinisher need not stock more than one kind of print material to produce both conventional prints and digitally produced prints, it is necessary that the CRT be adapted to produce satisfactory prints using conventional color print materials. As a result, the use of the phosphor taught by the above-identified published U.K. patent application in CRTs for exposing color print material results in an extremely unbalanced exposure program to compensate for the low sensitivity of the red sensitive emulsion relative to the blue and green sensitive emulsions as compared to photographic film. Thus, the use of such a phosphor for exposing color photographic print material results in a more complicated, slower and more expensive system.

Single-component phosphor materials have been proposed in which the phosphor host contains more than one type of activator. The emission spectrum from such a phosphor supposedly contains emission from both activators. In practice, however, the multiple activators interact with each other and the degrades the overall efficiency of the phosphor.

Various other CRT single component phosphors have been developed, but none of them have been found to produce light having a balance of colors that match the light sensitivity of photographic color print material such that prints can be produced quickly and economically, and without the objectionable results produced by the spatial nonuniform light emission by the prior multi-phosphor mixtures. Accordingly, the provision of a single component phosphor capable of producing light having a balance of colors to match the photosensitivity of color photographic print material would significantly contribute to the productivity and economy of producing color photographic prints from digital information.

### SUMMARY OF THE INVENTION

According to one embodiment of the present invention, apparatus is provided for exposing color photographic print material to an image derived from a source of information comprising a plurality of signals representing a plurality of mono-color images derived from a multi-color image. The apparatus comprises a CRT having a display screen, and means for generating a series of mono-color images on the display screen from the signals. A plurality of color filters are provided along with means for selecting a color filter having a color to produce a color image on the photographic print material corresponding to the mono-color image being generated on the display screen. Means is provided for disposing the selected color filter between the CRT and the photographic print material as well as means for projecting each of the mono-color images onto the photographic paper through a selected color filter. The display screen comprises a single component phosphor selected from the group consisting of europium-activated gadolinium oxysulfide (Gd₂O₂S:Eu) and europium-activated yttrium oxysulfide (Y₂O₂S:Eu).

Further, the present invention provides apparatus as described above, wherein the europium concentration is between 0.2 and 0.7 atomic percent of all metallic ions present.

Still further, the present invention provides apparatus as described above, wherein the europium concentration is about 0.4 atomic percent.

Various means for practicing the invention and other features and advantages thereof will be apparent from the following detailed description of illustrative, preferred embodiments of the invention, reference being made to the accompanying drawings.

### BRIEF DESCRIPTION OF THE DRAWINGS

Figure 1 is a schematic illustration of a photographic printing system incorporating a CRT in which the present invention can be employed;
Figure 2 is a graphical representation of the spectral sensitivity of a photographic print material-with which the present invention can be used;
Figure 3 is a graphical representation of the spectral transmittance of typical color filters employed in the system of Fig.1;
Figure 4 is a graphical representation of the resulting effective spectral photosensitivity of the combination of the photographic print material and the color filters; and
Figure 5 is a graphical representation of the emission spectrum of the CRT phosphor according to the present invention.

### DESCRIPTION OF THE PREFERRED EMBODIMENT

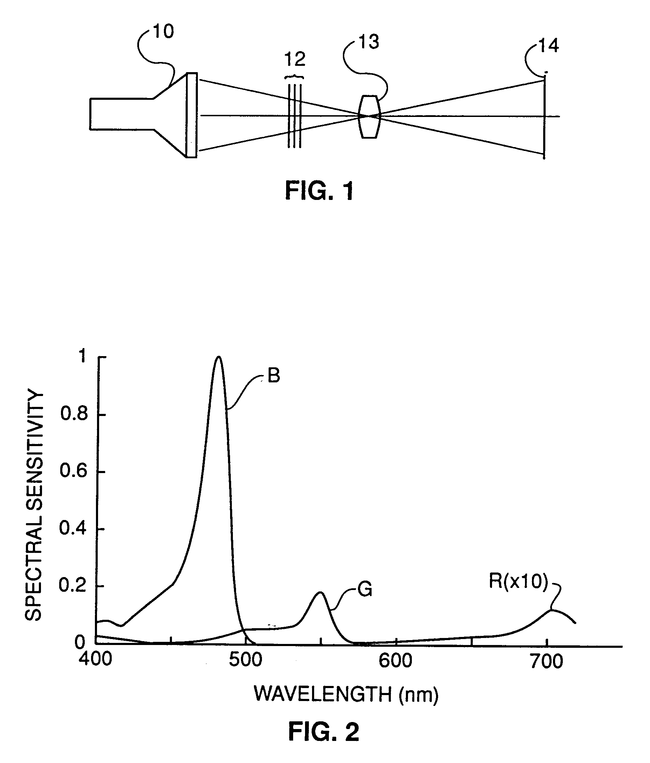

A schematic illustration of a photographic printing system incorporating a CRT is shown in Figure 1, and comprises a monochromatic CRT 10 having the phosphor screen of the present invention. The image generated on the phosphor screen of the CRT 10 is imaged onto the photosensitive print material 14 by an optical system 13 through a filter which is selected from a filter set 12, to project only the color of the image being generated on the CRT screen from the mono-color image signals.

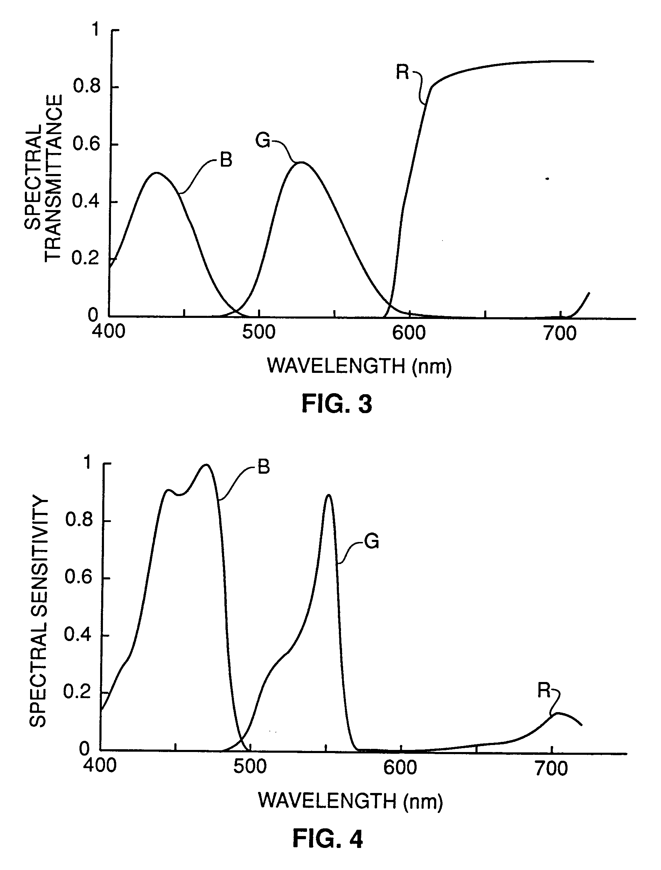

As noted above, the relative red, green and blue light sensitivity of color photographic materials varies significantly among the different types of materials. For photographic print materials, an example of whose spectral sensitivity is shown in Figure 2, the peak spectral sensitivity "B" of the blue-photosensitive layer is one hundred times greater than the peak spectral sensitivity "R" of the red-sensitive layer. When these sensitivities are combined with the spectral transmittance of typical color filters, shown in Figure 3, the resulting effective red "R", green "G" and blue "B" spectral sensitivities of the system are as shown in Figure 4. Thus, the peak spectral sensitivity "B" of the blue-photosensitive layer is now ten times the peak spectral photosensitivity "R" of the red-sensitive layer. Accordingly, a phosphor mixture with an emission spectrum inversely matched to such a spectral photosensitivity has to contain substantially more red-emitting phosphor than either green-emitting or blue-emitting phosphors.

In principle, a three-component phosphor mixture gives the correct color balance simply by adjusting the proportions of each color component. In practice this has not been found to be a workable solution. The correct color balance would require almost 90% of the phosphor to be red-emitting and the remaining 10% to be split between green-emitting and blue-emitting. This inevitably compromises the ultimate quality of the photographic print since color granularity is introduced into the CRT screen due to the different types of phosphor particles present, each with a different emission spectrum.

In addition to providing a phosphor screen whose resolution is limited by the size of the electron beam rather than the distribution of phosphor particles, the single-component phosphor screen has significant advantages in terms of system resolution and ease of CRT fabrication.

The present invention provides a highly efficient, single-component phosphor system, which is singly activated and whose emission is matched to the sensitivity of photosensitive media such as that, for example, of Figure 2 or Figure 4. The phosphor must be primarily a red-emitter, due to the low spectral sensitivity of the print material in the red, but the total emission spectrum must also contain sufficient blue and green emission to give a balanced exposure. The system has some flexibility in that the relative intensities of the red, green and blue emissions can be adjusted.

The phosphor systems that are disclosed hereby are the rare earth oxysulfides, yttrium oxysulfide or gadolinium oxysulfide, activated with europium. While lanthanum oxysulfide activated with europium is an intense red-emitter also, it does not have enough blue emission to be adequate for this application. Europium employed in the above-mentioned rare earth oxysulfide hosts at a concentration of 0.1 atomic percent generates emission lines throughout the visible spectrum and are highly efficient as CRT phosphors. At a high europium content, (greater than 2.0 atomic percent), the blue and green emission lines are almost totally quenched, (the red emission lines are affected to a much lesser degree), and the phosphor is a red-emitter. Yttrium, gadolinium and lanthanum oxysulfides activated with a high concentration of europium, usually in excess of 2.0 atomic percent and sometimes as high as 3 atomic percent or more, are well known red-emitting CRT phosphors. Yttrium oxysulfide:europium is the standard red-emitting phosphor used in all commercial television tubes. At high europium content only the emission lines at 627 and 706 nanometers (red) remain with significant emission.

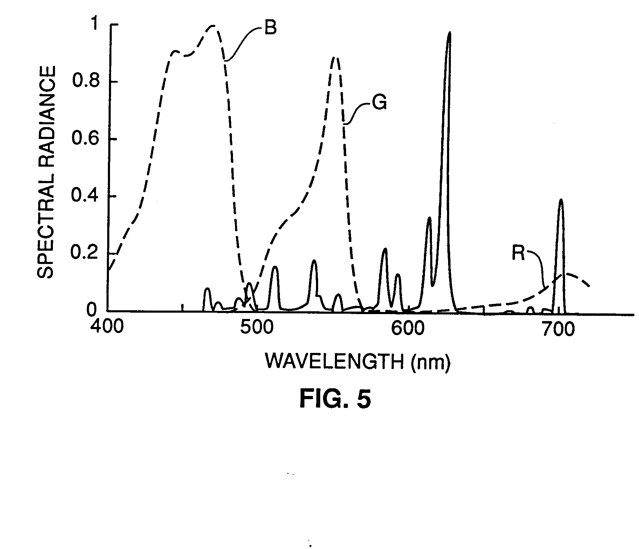

However, it has been found that, as the europium content of the phosphor is increased in the range 0.1 to 0.7 atomic percent, the green and blue emissions become progressively quenched. The europium concentration therefore can be used as an adjustable parameter which controls the relative intensities of the red, green and blue emissions. With this choice of europium content, the blue and green emission lines are partially quenched, while retaining the strong red emissions at 627 and 706 nanometers. It has been found that at a europium content of approximately 0.4 atomic percent the red, green and blue emissions are substantially balanced relative to the spectral sensitivity of the photosensitive medium of Figure 2 or Figure 4. The phosphor still retains the high luminescent efficiency that is typical of europium-activated oxysulfide phosphors. We have found that by reducing the europium content below that which is present in the standard commercial television red phosphor, blue and green emission lines are retained and, paradoxically, the red emission is also enhanced. It appears that, in order to totally quench the blue and green emission in the commercial red phosphor, there is some loss in the efficiency of the red emission. Therefore, the overall power efficiency of the reduced europium phosphor of the present invention is therefore greater than standard red oxysulfide phosphor. The emission spectrum of the europium-activated, gadolinium oxysulfide phosphor is shown as the solid line in Figure 5, with the spectral sensitivity of the system illustrated in Fig. 4 shown as the dotted line in Fig. 5.

The present europium-activated, gadolinium oxysulfide phosphor also contains a trace amount (35 ppm) of terbium or praseodymium to increase the efficiency of red-emitting oxysulfide by as much as 20%, as is well known in the art. While the exact mechanism by which this increase is achieved is not totally understood, it is believed that the presence of terbium or praseodymium blocks a non-radiative energy loss mechanism and therefore enhances the desired radiative process. There is no significant emission attributable to praseodymium or terbium present in the emission spectrum of the phosphor.

According to the present invention, it is possible to obtain properly exposed prints with approximately equal numbers of blue, green and red scan fields. In addition, the fine, even granular structure of the phosphor screen obtained with the single-component phosphor provides satisfactory prints without objectionable artifacts even in small size CRTs..

The invention has been described in detail with particular reference to a presently preferred embodiment, but it will be understood that variations and modifications can be effected within the spirit and scope of the invention.

## Claims

1. Apparatus for exposing color photographic print material to an image derived from a source of information comprising a plurality of signals representing a plurality of mono-color images derived from a multi-color image, said apparatus comprising a CRT having a display screen, means for generating a series of mono-color images on said display screen from said signals, a plurality of color filters, means for selecting a color filter having a color to produce a color image on said photographic print material corresponding to the mono-color image being generated on said display screen, means for disposing said selected color filter between said CRT and said photographic print material paper, means for projecting each of said monocolor images onto said photographic print material through a selected color filter, said display screen comprising a single component phosphor selected from the group consisting of europium-activated gadolinium oxysulfide (Gd₂O₂S:Eu) and europium-activated yttrium oxysulfide (Y₂O₂S:Eu).

2. Apparatus according to claim 1 wherein the europium concentration is between 0.2 and 0.7 atomic percent of all the metallic ions present.

3. Apparatus according to claim 1 wherein the europium concentration is about 0.4 atomic percent of all the metallic ions present.
